# EUROPEAN PATENT APPLICATION

(11) **EP 4 395 007 A1**
(43) Date of publication of application: **03.07.2024**
(21) Application number: 22900022.9
(22) Date of filing: 08.09.2022
(51) Int. Cl.: H01M 10/615, H01M 50/244, H01M 50/249

(54) **BATTERY PACK AND ELECTRIC VEHICLE**

(30) Priority: 30.11.2021 CN 202122978627 U
(71) Applicant: BYD Company Limited, Shenzhen, Guangdong 518118 (CN)
(72) Inventor: WANG, Xiao, Shenzhen, Guangdong 518118 (CN); YOU, Yueqiu, Shenzhen, Guangdong 518118 (CN); SHU, Yuanmao, Shenzhen, Guangdong 518118 (CN); ZHENG, Weixin, Shenzhen, Guangdong 518118 (CN); LU, Zhipei, Shenzhen, Guangdong 518118 (CN)
(74) Representative: Arnold & Siedsma
(86) International application number: PCT/CN2022/117696
(87) International publication number: WO 2023/098213

(57) **Abstract**

A battery pack and an electric vehicle are provided. The battery pack includes a tray and a heating component. The heating component is arranged within the tray, and the heating component includes multiple heating sections. In the heating component of the battery pack, heating powers of the multiple heating sections are different, and the multiple heating sections are respectively configured to heat multiple regions within the tray to balance an ambient temperature within the tray.

## Description

### CROSS REFERENCE TO RELATED APPLICATIONS

The present disclosure claims the priority to Chinese Patent Application No. 202122978627.2, filed on November 30, 2021 and entitled "BATTERY PACK AND ELECTRIC VEHICLE". The entire content of the above-referenced application is incorporated herein by reference.

### FIELD

The present disclosure relates to the field of vehicle component technologies, and more specifically, to a battery pack and an electric vehicle.

### BACKGROUND

With the increasing environmental awareness of people, a growing number of electric vehicles have come into people's view. As a main power component of an electric vehicle, a battery plays a key role in long-term stable operation of the electric vehicle.

The operation stability of the battery is closely related to an ambient temperature of the battery. At extremely low temperatures (-40°C to -10°C), the overall temperature of the battery during long-term storage is close to the ambient temperature. On the one hand, the extremely low ambient temperature may affect a capacity of a battery core inside the battery, resulting in an insufficient discharge capacity of the battery, and on the other hand, the extremely low ambient temperature may affect utilization of battery power and limit the power output of the electric vehicle.

### SUMMARY

In order to resolve the foregoing technical problems, an object of an embodiment of the present disclosure is to provide a new technical solution of a battery pack and an electric vehicle. According to the battery pack and the electric vehicle provided in the present disclosure, a heating component is formed by sections, so that the heating components with different heating powers heat different regions inside a tray, the balance of the ambient temperature inside the tray is ensured, and charging and discharging performance of the battery pack is improved.

According to a first aspect of the present disclosure, a battery pack is provided, including:
a tray; and
a heating component, the heating component being arranged within the tray, the heating component including multiple heating sections, heating powers of the multiple heating sections being different, and the multiple heating sections being respectively configured to heat multiple regions within the tray to balance an ambient temperature within the tray.

In one embodiment, the heating component includes a primary heating section. The primary heating section includes a first primary heating section and a second primary heating section. The first primary heating section and the second primary heating section are respectively arranged on two opposite sides within the tray. The first primary heating section and the second primary heating section are configured to heat a low temperature region within the tray.

In one embodiment, the number of the first primary heating section is at least one. The number of the second primary heating section is at least one. The first primary heating section is arranged on an inner side of a long edge on one side of the tray. The second primary heating section is arranged on an inner side of a long edge on an other side of the tray.

In one embodiment, the heating component further includes a secondary heating section. The number of the secondary heating section is at least one. The secondary heating section is arranged on an inner side of a short edge of the tray.

In one embodiment, a heating power of the primary heating section is greater than a heating power of the secondary heating section. The primary heating section is configured to adjust a temperature of a first region within the tray. The secondary heating section is configured to adjust a temperature of a second region within the tray.

Before the heating component heats a region within the tray, the temperature of the first region is lower than the temperature of the second region.

In one embodiment, the primary heating section and the secondary heating section are connected in series or in parallel.

In one embodiment, the battery pack further includes at least one battery module. The battery module is arranged within the tray.

In one embodiment, the heating component is arranged between the tray and the battery module.

In one embodiment, multiple battery modules are arranged within the tray. The heating component is arranged between adjacent battery modules.

In one embodiment, a difference between a temperature of a region with a highest temperature and a temperature of a region with a lowest temperature within the tray is less than or equal to 5°C.

In one embodiment, the heating component is at least one of a polyimide (PI) heating film or a PTC heater.

In one embodiment, the battery pack further includes thermal insulation cotton. The thermal insulation cotton is attached to an outer peripheral side of the tray.

In one embodiment, the tray is made of a metal material.

In one embodiment, the tray is made of one of aluminum alloy or stainless steel.

In one embodiment, two first primary heating sections are arranged.

In one embodiment, two second primary heating sections are arranged.

In one embodiment, three secondary heating sections are arranged.

In one embodiment, the primary heating section and the secondary heating section are connected in series to form a chain heating component. The heating component is arranged to extend along a gap between the tray and the battery module.

In one embodiment, the primary heating section and the secondary heating section are connected in parallel to form the primary heating section and the secondary heating section that are stacked.

According to a second aspect of the present disclosure, an electric vehicle is provided, including the battery pack according to the first aspect.

A technical effect of an embodiment of the present disclosure is as follows:

An embodiment of the present disclosure provides a battery pack. The battery pack includes a tray and a heating component. The heating component is arranged within the tray, and the heating component includes multiple heating sections. In the heating component of the battery pack, heating powers of the multiple heating sections are different, and the multiple heating sections are respectively configured to heat multiple regions within the tray to balance an ambient temperature within the tray. The heating component is formed by sections, so that the heating components with different heating powers heat different regions within the tray, the balance of the ambient temperature inside the tray is ensured, and charging and discharging performance of the battery pack is improved.

Other features and advantages of the present disclosure become apparent through the following detailed description of exemplary embodiments of the present disclosure with reference to the accompanying drawings.

### BRIEF DESCRIPTION OF THE DRAWINGS

The accompanying drawings that are incorporated into and constitute a part of the specification illustrate embodiments of the present disclosure, and are used to explain the principle of the present disclosure together with the description.
FIG. 1 is a schematic structural diagram I of a battery pack according to an embodiment of the present disclosure.
FIG. 2 is a schematic structural diagram II of a battery pack according to an embodiment of the present disclosure.
FIG. 3 is a cross-sectional view of a battery pack according to an embodiment of the present disclosure.
FIG. 4 is a partial enlarged view of FIG. 3.
FIG. 5 is a three-dimensional view of another battery pack according to an embodiment of the present disclosure.
FIG. 6 is a top view of another battery pack according to an embodiment of the present disclosure.

In the drawings: 1. Tray; 2. Battery module; 3. heating component; 31. First heating section; 32. Second heating section; 33. Third heating section; 34. Fourth heating section; 35. Fifth heating section; 36. Sixth heating section; 37. Seventh heating section; 4. Thermal insulation cotton.

### DETAILED DESCRIPTION

Various exemplary embodiments of the present disclosure are to be described in detail with reference to the accompanying drawings. It is to be noted that, unless otherwise specified, relative arrangement, numerical expressions, and numerical values of components and steps described in the embodiments do not limit the scope of the present disclosure.

The following description of at least one exemplary embodiment is actually merely illustrative, and in no way constitute any limitation on the present disclosure and application or use thereof.

Technologies, methods, and devices known to a person of ordinary skill in the related art may not be discussed in detail, but in proper circumstances, the technologies, methods, and devices shall be regarded as a part of the specification.

In all examples that are shown and discussed herein, any specific value should be construed only as an example but not a limitation. Therefore, other examples of the exemplary embodiments may have different values.

It is to be noted that, similar reference numerals and letters denote similar items in the accompanying drawings below. Therefore, once an item is defined in an accompanying drawing, the item does not need to be further discussed in subsequent accompanying drawings.

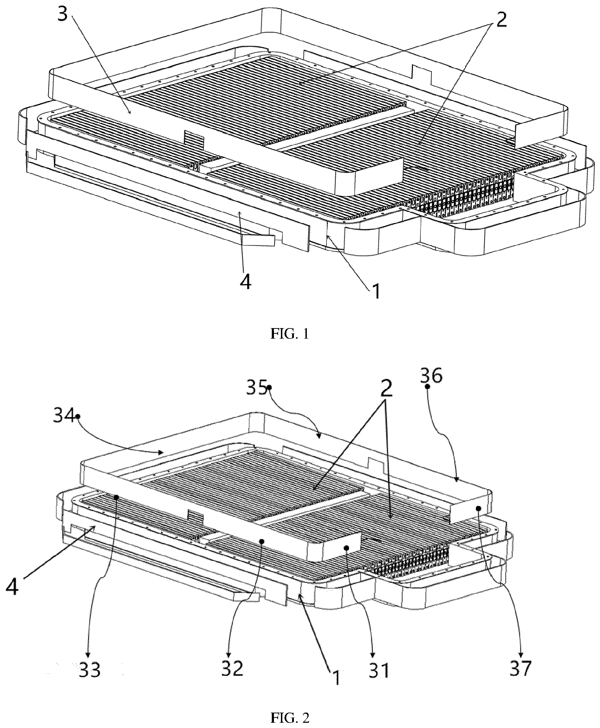

Referring to FIG. 1 to FIG. 4, an embodiment of the present disclosure provides a battery pack. The battery pack may be applied to an electric vehicle and provide power for the electric vehicle. The battery pack includes
a tray 1 and a heating component 3.

Referring to FIG. 1 and FIG. 2, the heating component 3 is arranged within the tray 1, and the heating component 3 includes multiple heating sections. The heating component 3 may heat an environment within the tray 1, which may specifically heat air within the tray 1 and other components in the environment within the tray 1. In addition, heating powers of the multiple heating sections are different, and the multiple heating sections are respectively configured to heat multiple regions within the tray 1 to balance an ambient temperature within the tray 1.

Specifically, the ambient temperatures of different regions within the tray 1 are different. When the heating component 3 heats different regions within the tray 1, since the heating component 3 is formed in sections, the heating component with a relatively large heating power may be placed in a region with a relatively low temperature within the tray 1. Specifically, when a battery module is arranged within the tray 1, a side surface of a battery core electrode plate in the battery module generates less heat, and a region opposite to the side surface of the battery core electrode plate within the tray 1 becomes the region with the relatively low temperature. However, the heating component with a relatively small heating power is placed in a region with a relatively high temperature within the tray 1. Specifically, when the battery module is arranged within the tray 1, a surface of the battery core electrode plate in the battery module is a main heating surface, and a region opposite to the heating surface of the battery core electrode plate within the tray 1 becomes the region with the relatively high temperature, so that temperatures of different regions within the tray 1 are relatively close after the heating component 3 heats inside of the tray 1, which reduces the temperature difference in different regions within the tray 1.

In addition, the tray 1 may be made of a metal material. For example, the tray 1 is made of aluminum alloy or stainless steel, to ensure structural strength of the tray 1, so that the tray 1 may bear internal structural members required for the tray.

The battery pack according to the embodiment of the present disclosure includes a tray 1 and a heating component 3. The heating component 3 is arranged within the tray 1. The heating component 3 includes multiple heating sections. In the heating component 3 of the battery pack, heating powers of the multiple heating sections are different, so as to evenly heat multiple regions within the tray 1. The heating component 3 is formed by sections, so that the heating components with different heating powers evenly heat the different regions within the tray 1, which may ensure the balance of the ambient temperature inside the tray 1, improve charging and discharging performance of the battery pack, and ensure the battery pack as a power output of a power battery of the electric vehicle.

In one embodiment, the heating component 3 includes a primary heating section. The primary heating section includes a first primary heating section and a second primary heating section. The first primary heating section and the second primary heating section are respectively arranged on two opposite sides within the tray 1. The first primary heating section and the second primary heating section are configured to heat a low-temperature region within the tray 1.

Specifically, components such as the battery within the tray 1 need to be maintained at an appropriate temperature during storage and operation. For example, in a cold environment, the battery module within the tray 1 need to obtain a specific amount of heat during storage and operation to ensure suitability of the temperature. Moreover, a rectangular battery module has a relatively low temperature on a long side surface thereof (that is, a surface with the largest area among the side surfaces of the battery module, which is referred to as a large surface for short), and needs more heat to maintain relatively stable performance. The first primary heating section and the second primary heating section provided in the embodiment of the present disclosure may be respectively arranged on two opposite sides within the tray 1, for example, respectively arranged on two opposite sides within the tray 1 opposite to the long side surface of the rectangular battery module. The first primary heating section and the second primary heating section may heat the low temperature region within the tray 1 to ensure the balance of the ambient temperature within the tray 1.

In one embodiment, the number of the first primary heating section is at least one, the number of the second primary heating section is at least one, and the first primary heating section is arranged on an inner side of a long edge on one side of the tray 1. The second primary heating section is arranged on an inner side of a long edge on an other side of the tray 1.

In a specific implementation, referring to FIG. 2, two first primary heating sections are arranged. The first primary heating section includes a second heating section 32 and a third heating section 33. Two second primary heating sections are arranged. The second primary heating section includes a fifth heating section 35 and a sixth heating section 36. The second heating section 32 and the third heating section 33 are arranged on the inner side of the long edge on one side of the tray 1. Specifically, the tray 1 includes two opposite long edge beams, the second heating section 32 and the third heating section 33 are arranged on an inner side of a long edge beam on one side of the tray 1, the fifth heating section 35 and the sixth heating section 36 are arranged on an inner side of a long edge on the other side of the tray 1, and the fifth heating section 35 and the sixth heating section 36 are arranged on an inner side of a long edge beam on the other side of the tray 1. The second heating section 32 and the third heating section 33 may be connected in series to form a chain heating section, the fifth heating section 35 and the sixth heating section 36 may also be connected in series to form a chain heating section, and a length of the chain heating section may be equal to a length of the long edge of the tray 1, to ensure sufficient heating and thermal insulation for the temperature within the tray 1.

In one embodiment, referring to FIG. 2, the heating component 3 further includes a secondary heating section. The number of the secondary heating section is at least one. The secondary heating section is arranged on an inner side of a short edge of the tray 1.

Three secondary heating sections are arranged. The secondary heating section includes a first heating section 31, a fourth heating section 34, and a seventh heating section 37. The first heating section 31, the fourth heating section 34, and the seventh heating section 37 are arranged on the inner side of the short edge of the tray 1, that is, on an inner side of a short edge beam of the tray 1.

Specifically, the component within the tray 1 may be maintained at an appropriate temperature in all directions during storage and operation. For example, in a cold environment, the battery module within the tray 1 may obtain a specific amount of heat from all side surfaces of the tray 1 during storage and operation to ensure the temperature suitability of the tray, while a heating demand of a rectangular battery module on its short side surface (that is, a small surface) is less than that on its long side surface (that is, a large surface). The first heating section 31, the fourth heating section 34, and the seventh heating section 37 provided in the embodiment of the present disclosure may be respectively arranged on two opposite sides of the short side surface within the tray 1 to ensure heating efficiency of the heating component 3 and balance of the ambient temperature within the tray 1.

In one embodiment, a heating power of the primary heating section is greater than a heating power of the secondary heating section. The primary heating section is configured to adjust a temperature of a first region within the tray 1. The secondary heating section is configured to adjust a temperature of a second region within the tray 1.

Before the heating component 3 heats a region within the tray 1, the temperature of the first region is lower than the temperature of the second region.

Specifically, due to the changes in the arrangement and structure of the components within the tray 1, the ambient temperatures of different regions within the tray 1 are different. When the heating component 3 heats different regions within the tray 1, the heating component 3 is formed by sections. The primary heating section with a relatively large heating power may be placed in a region with a relatively low temperature within the tray 1, and the secondary heating section with a relatively small heating power may be placed in a region with a relatively high temperature within the tray 1, so that the temperatures of different regions within the tray 1 are relatively close after the heating component 3 heats inside of the tray 1, which reduces the temperature difference in different regions within the tray 1.

In one embodiment, the battery pack further includes at least one battery module 2, and the battery module 2 is arranged within the tray 1.

Specifically, one or multiple battery modules 2 may be arranged. The multiple battery modules 2 are arranged within the tray 1, and the tray 1 is configured to bear the battery modules 2 inside. The heating component 3 is arranged within the tray 1, and the heating component 3 may heat air within the tray 1, so that the ambient temperature within the tray 1 is maintained at an appropriate storage and operation temperature of the battery module 2, thereby increasing a capacity and a service life of the battery module 2.

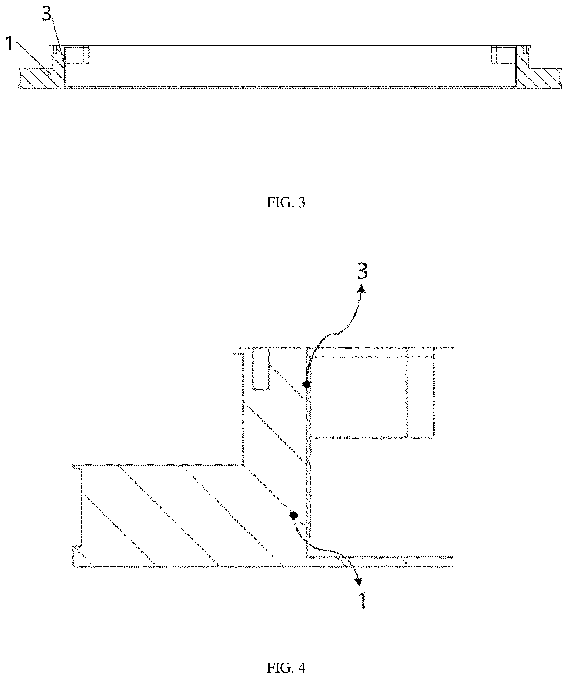

In one embodiment, referring to FIG. 1 and FIG. 3, the heating component 3 is arranged between the tray 1 and the battery module 2.

Specifically, when the battery module 2 is placed within the tray 1, a bottom surface of the tray 1 may support the battery module 2, and side edges of the tray 1 may surround peripheral sides of the battery module 2. That the heating component 3 is arranged between the tray 1 and the battery module 2 may specifically mean that the heating component 3 is arranged between the bottom surface of the tray 1 and the bottom of the battery module 2, or the heating component 3 is arranged between an inner side of the edge beam of the tray 1 and the peripheral side of the battery module 2. In this way, the environment within the tray 1 may be heated by the heating component 3 to achieve the purpose of heating and thermal insulation of the battery module 2.

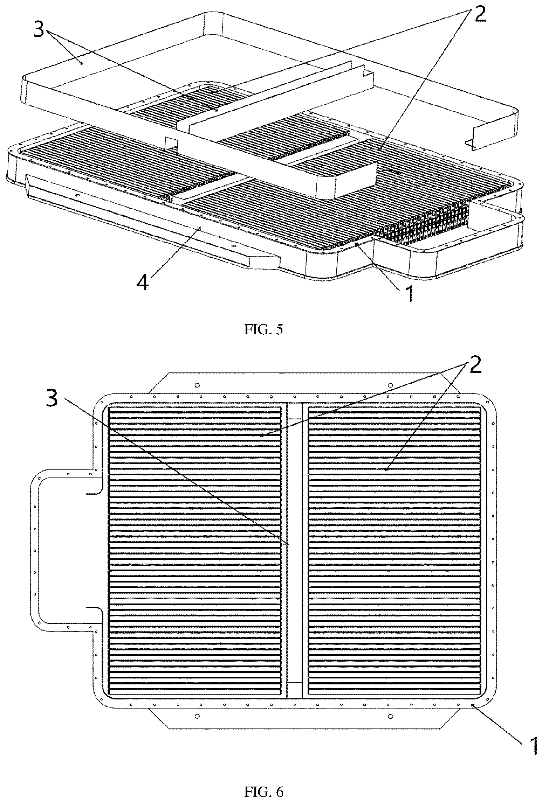

In one embodiment, referring to FIG. 5 and FIG. 6, the multiple battery modules 2 are arranged within the tray 1, and the heating component 3 is arranged between adjacent battery modules 2.

Specifically, the tray 1 may be used as a framework for supporting the battery pack to stably support and position the battery module 2. A structure of the tray 1 may be designed based on a size of the battery module 2. For example, a structure matching the tray 1 may be designed based on the size of one battery module 2, or a frame structure matching the tray 1 may be designed based on the sizes of the multiple battery modules 2. The multiple battery modules 2 may be fixed through a beam separator, and the heating component 3 may be fixed to the beam separator.

In a specific implementation, as shown in FIG. 1, two battery modules 2 are symmetrically arranged within the tray 1. Each battery module 2 occupies nearly half of the space within the tray 1. The two battery modules 2 are separated by a separator. The heating component 3 is an annular component with a partial opening, and is arranged within a side edge of the tray 1 and between peripheral sides of the two battery modules 2, so as to heat the environment within the tray 1 and achieve the effect of heating and thermal insulation for the two battery modules 2.

In one embodiment, referring to FIG. 1 and FIG. 2, the primary heating section and the secondary heating section are connected in series.

Specifically, the series connection between the primary heating section and the secondary heating section may be series connection between an internal circuit of the primary heating section and an internal circuit of the secondary heating section. After the primary heating section and the secondary heating section are connected in series, a chain heating component 3 may be formed, so that the heating component 3 may be arranged to extend along a gap between the tray 1 and the battery module 2 to heat different positions between the tray 1 and the battery module 2. For example, the heating component 3 may adopt resistive heating. By setting a resistance of the primary heating section to be greater than a resistance of the secondary heating section, the primary heating section may have a greater heating power than the secondary heating section at the same current, so that the primary heating section and the secondary heating section may perform heating and thermal insulation for positions between the tray 1 and the battery module 2 with different heating demands.

In addition, the internal circuits between the primary heating section and the secondary heating section may also be connected in parallel. After the primary heating section and the secondary heating section are arranged in parallel, the primary heating section and the secondary heating section may be stacked, or a chain structure of the primary heating section and the secondary heating section may be formed by controlling a length of a connecting line between the battery module 2 and the heating section, so as to heat different positions between the tray 1 and the battery module 2. In a case that voltages at two ends of the primary heating section and the secondary heating section are equal, different heating powers may be adjusted by controlling a magnitude of different currents in the primary heating section and the secondary heating section, so as to achieve the purpose of heating the positions between the tray 1 and the battery module 2 with different heating demands.

Further, the first heating section 31, the second heating section 32, the third heating section 33, the fourth heating section 34, the fifth heating section 35, the sixth heating section 36, and the seventh heating section 37 are successively connected in series to form the heating component 3 with an annular structure, as shown in FIG. 2. The heating component 3 with the annular structure is arranged between an inner side of a side wall of the tray 1 and the battery module 2, and a matching heating power of each heating section may be obtained through temperature simulation of the battery pack.

Specifically, specific parameters of the simulation include:
an ambient temperature is -20°C, the whole battery pack is kept at a low temperature of -20°C for 12 hours, the lowest temperature of the battery core in the battery module is not lower than 0°C, a temperature range in the battery pack (a difference between the maximum temperature and the minimum temperature) is not greater than 5°C, and power consumption of the heating component 3 is 1 kWh.

Under the above parameters, the maximum usable power of 85 W for heating and thermal insulation of the whole battery pack is calculated. Specific distribution of the heating power includes: the heating power of the first heating section 31 is 10 W, the heating power of the second heating section 32 is 5 W, the heating power of the third heating section 33 is 5 W, the heating power of the fourth heating section 34 is 15 W, the heating power of the fifth heating section 35 is 20 W, the heating power of the sixth heating section 36 is 15 W, and the heating power of the seventh heating section 37 is 15 W.

The simulation results show that for a battery pack stored in a -20°C environment for 12 hours, the lowest temperature of the battery core in battery module 2 is 0.58°C, and the temperature range in the battery pack is 2.94°C. Such an appropriate temperature and such a small temperature range effectively ensure that the capacity and the power of the battery module 2 inside the battery pack may be fully utilized.

In addition, in a case that other conditions remain unchanged, during simulation of the battery pack not including the heating component 3 provided in the embodiment of the present disclosure, the lowest temperature of the battery core in the battery pack is -7.88°C, and the temperature range in the battery pack is 9.32°C. An excessively low temperature and an excessively large temperature range seriously affect utilization of the capacity and the power of the battery core inside the battery pack.

In one embodiment, a difference between a temperature of a region with a highest temperature and a temperature of a region with a lowest temperature within the tray 1 is less than or equal to 5°C.

Specifically, during the storage and operation of the battery module 2 within the tray 1, the battery module 2 has an appropriate storage and operation temperature. When a temperature of a local region within the tray 1 is excessively high, the service life of the battery module 2 may be shortened and even a risk of explosion may occur if the battery module is kept in a region with an excessively high temperature for a long time. However, when the temperature of the local region within the tray 1 is excessively low, the capacity and power of the battery module 2 may be reduced if the battery module is kept in a region with an excessively low temperature for a long time. To enable the battery module 2 to be in an environment with an appropriate temperature and a relatively small temperature difference, heating components with different heating powers may be arranged based on the heating demands of different regions within the tray 1 through the segmented heating component 3 in the embodiment of the present disclosure, so as to ensure that the difference between the temperature of the region with the highest temperature and the temperature of the region with the lowest temperature within the tray 1 is less than or equal to 5°C, thereby improving uniformity of the ambient temperature within the tray 1.

In one embodiment, the heating component 3 is at least one of a polyimide (PI) heating film or a PTC heater.

Specifically, the PI heating film may be a heating film obtained by combining the PI film with a metal wire, and the PI heating film is heated by using a resistance wire. When multiple heating components adopt the PI heating film, the distribution of heating power when the multiple heating components are connected in series may be realized by distributing the resistance inside the PI heating film. The heating power is specifically P = I2R, so as to flexibly heat different regions inside the tray 1 by the heating component 3. However, the PTC heater is a heating component composed of a PTC ceramic heating element and an aluminum tube. The PTC heater has the advantages of low heat resistance and high heat exchange efficiency, and may heat the inside of the tray 1 efficiently.

In one embodiment, referring to FIG. 1 and FIG. 2, the battery pack further includes thermal insulation cotton 4. The thermal insulation cotton 4 is attached to an outer peripheral side of the tray 1.

Specifically, the thermal insulation cotton 4 may be made of high polymer materials such as polyurethane or polyimide, and the thermal insulation cotton 4 may be adhered to the outside of a frame of the tray 1 by using adhesive. For example, the thermal insulation cotton 4 may be bonded around the frame of the tray 1 in a ring shape. The thermal insulation cotton 4 has relatively high thermal insulation performance, and may play a good role in thermal insulation for the battery pack, so as to ensure stable operation of the battery module 2 within the tray 1.

An embodiment of the present disclosure further provides an electric vehicle, including the battery pack.

Specifically, the battery pack may be used as a power battery of the electric vehicle. The heating component 3 of the battery pack includes multiple heating sections. In the heating component of the battery pack, heating powers of the multiple heating sections are different, so as to evenly heat multiple regions within the tray 1. The heating component 3 is formed by sections, so that the heating components with different heating powers evenly heat the regions with different temperatures within the tray 1, which ensures the balance of the ambient temperature inside the tray 1, improves charging and discharging performance of the battery pack, and increases the power output of the electric vehicle.

Although some specific embodiments of the present disclosure have been described in detail by using the examples, a person skilled in the art should understand that the foregoing examples are merely for description and are not intended to limit the scope of the present disclosure. A person skilled in the art should understand that modifications may be made to the foregoing embodiments without departing from the scope and spirit of the present disclosure. The scope of the present disclosure is defined by the appended claims.

## Claims

1. A battery pack, comprising:
a tray (1); and
a heating component (3), the heating component (3) being arranged within the tray (1), the heating component (3) comprising a plurality of heating sections, heating powers of the plurality of heating sections being different, and the plurality of heating sections being respectively configured to heat a plurality of regions within the tray (1) to balance an ambient temperature within the tray (1).

2. The battery pack according to claim 1, wherein the heating component (3) comprises a primary heating section; the primary heating section comprises a first primary heating section and a second primary heating section; the first primary heating section and the second primary heating section are respectively arranged on two opposite sides within the tray (1); and the first primary heating section and the second primary heating section are configured to heat a low-temperature region within the tray (1).

3. The battery pack according to claim 2, wherein the number of the first primary heating section is at least one, the number of the second primary heating section is at least one; the first primary heating section is arranged inside a long edge on one side of the tray (1); and the second primary heating section is arranged inside a long edge on an other side of the tray (1).

4. The battery pack according to claim 2 or 3, wherein the heating component (3) further comprises a secondary heating section; the number of the secondary heating section is at least one; and the secondary heating section is arranged inside a short edge of the tray (1).

5. The battery pack according to claim 4, wherein a heating power of the primary heating section is greater than a heating power of the secondary heating section; the primary heating section is configured to adjust a temperature of a first region within the tray (1); the secondary heating section is configured to adjust a temperature of a second region within the tray (1); and
before the heating component (3) heats a region within the tray (1), the temperature of the first region is lower than the temperature of the second region.

6. The battery pack according to claim 4 or 5, wherein the primary heating section and the secondary heating section are connected in series or in parallel.

7. The battery pack according to any of claims 1 to 6, further comprising at least one battery module (2), the battery module (2) being arranged within the tray (1).

8. The battery pack according to claim 7, wherein the heating component (3) is arranged between the tray (1) and the battery module (2).

9. The battery pack according to claim 7, wherein a plurality of battery modules (2) are arranged within the tray (1); and the heating component (3) is arranged between adjacent battery modules (2).

10. The battery pack according to any of claims 1 to 9, wherein a difference between a temperature of a region with a highest temperature and a temperature of a region with a lowest temperature within the tray (1) is less than or equal to 5°C.

11. The battery pack according to any of claims 1 to 10, wherein the heating component (3) is at least one of a polyimide (PI) heating film or a PTC heater.

12. The battery pack according to any of claims 1 to 11, further comprising thermal insulation cotton (4), the thermal insulation cotton (4) being attached to an outer peripheral side of the tray (1).

13. The battery pack according to any of claims 1 to 12, wherein the tray (1) is made of a metal material.

14. The battery pack according to any of claims 1 to 13, wherein the tray (1) is made of one of aluminum alloy or stainless steel.

15. The battery pack according to any of claims 2 to 6, wherein two first primary heating sections are arranged.

16. The battery pack according to any of claims 2 to 6, wherein two second primary heating sections are arranged.

17. The battery pack according to any of claims 4 to 6, wherein three secondary heating sections are arranged.

18. The battery pack according to any of claims 4 to 6, wherein the primary heating section and the secondary heating section are connected in series to form a chain heating component (3); and the heating component (3) is arranged to extend along a gap between the tray (1) and the battery module (2).

19. The battery pack according to any of claims 4 to 6, wherein the primary heating section and the secondary heating section are connected in parallel to form the primary heating section and the secondary heating section that are stacked.

20. An electric vehicle, comprising the battery pack according to any of claims 1 to 19.
